# EUROPÄISCHE PATENTSCHRIFT

(11) **EP 1 894 258 B1**
(45) Veröffentlichungstag und Bekanntmachung des Hinweises auf die Patenterteilung: **08.10.2008**
(21) Anmeldenummer: 06753183.0
(22) Anmeldetag: 19.05.2006
(51) Int. Cl.: H01L 41/09, B23Q 5/50

(54) **POSITIONIERER MIT FESTKÖRPERGELENK**
POSITIONING DEVICE WITH A FIXED-BODY JOINT
DISPOSITIF DE POSITIONNEMENT A ARTICULATION A CORPS SOLIDE

(30) Priorität: 09.06.2005 DE 102005026708
(43) Veröffentlichungstag der Anmeldung: 05.03.2008
(73) Patentinhaber: Attocube Systems AG, 80539 München (DE)
(72) Erfinder: HAFT, Dirk, 85591 Vaterstetten (DE); LINDENBERG, Tobias, 81543 München (DE); BÖDEFELD, Christoph, 85617 Assling (DE)
(74) Vertreter: Patentanwälte Lambsdorff & Lange
(86) Internationale Anmeldenummer: PCT/DE2006/000867
(87) Internationale Veröffentlichungsnummer: WO 2006/131089

(56) Entgegenhaltungen:
- EP-A- 0 292 989
- FR-A- 2 702 895
- GB-A- 2 316 222
- US-A- 5 229 679

## Beschreibung

Die Erfindung betrifft einen Positionierer, welcher insbesondere eine Positioniergenauigkeit im Sub-Millimeter-Bereich aufweist.

Positionierer mit Positioniergenauigkeiten im Sub-Millimeter-Bereich kommen in einer Vielzahl von Anwendungsbereichen in Forschung und Industrie zum Einsatz. Zur Erzielung einer hohen Positioniergenauigkeit müssen Systeme mit möglichst wenig mechanischen Teilen und mit einer hohen Qualität der Oberflächen im Bereich mechanischer Führungen oder Eingriffe verwendet werden. Neben einer möglichst hohen Reproduzierbarkeit und Skalierbarkeit von Bewegungswegen spielen Eigenschaften wie Erschütterungs-Unempfindlichkeit, Robustheit und Kompaktheit des Aufbaus im praktischen Gebrauch eine wesentliche Rolle. Darüber hinaus soll die Funktiorisfähigkeit solcher Positionierer häufig auch unter Extrembedingungen wie beispielsweise Tieftemperatur, Ultrahochvakuum (UHV) oder hohe elektrische oder magnetische Felder erhalten bleiben.

Es sind verschiedene Bautypen von Positionierern bekannt. Ein bekannter Bautyp, welcher sowohl eine hohe Positioniergenauigkeit ermöglicht als auch grundsätzlich für den Einsatz unter Extrembedingungen geeignet ist, verwendet einen sogenannten Trägheitsmotor, der auch als Slip-Stick-Antrieb bezeichnet wird. Slip-Stick-Antriebe basieren auf dem Prinzip einer mechanischen Reibschlusskupplung, welche bei einer ersten Relativbewegungsrichtung zwischen den reibschlüssig in Eingriff stehenden Kupplungsteilen im Bereich der Haftreibung und bei der entgegengesetzten Relativbewegungsrichtung im Bereich der Gleitreibung arbeitet. Auf diese Weise ergibt sich eine translatorische Bewegung zwischen den beiden Kupplungsteilen, wobei die Richtung und die Schrittweite der TransLationsbewegung über eine geeignete Ansteuerung eines Aktuators des Slip-Stick-Antriebs eingestellt werden kann.

Die Druckschrift GB 2 316 222 A offenbart einen Trägheitspositionierer mit einer Basisplatte und einer Trägerplatte, welche verschieblich gegeneinander in einer Lagerungsanordnung gelagert sind. Die Basisplatte und die Trägerplatte sind über einen Slip-Stick-Antrieb in einer Positionierungsachse mit Hilfe eines Aktuators reibungsgekoppelt auslenkbar. Zwei v-förmige, eine Vielzahl von Kugellagern umfassende Grabenstrukturen erstrecken sich parallel zur Positionierungsachse des Antriebs.

Slip-Stick-Antriebe sind meist empfindlich und können durch Stoß leicht beschädigt werden. Insbesondere kann der Aktuator - welcher häufig als Piezoelement ausgeführt ist - brechen oder in sonstiger Weise Schaden erleiden. Stoßeinwirkungen entstehen erfahrungsgemäß häufig aufgrund von unsachgemäßer Handhabung beim Montieren des Positionierers in der gewünschten Anwendung oder auch beim Transport z.B. durch das Herunterfallen des Positionierers auf den Boden.

Die der Erfindung zugrunde liegende Aufgabe besteht darin, einen gegen Stoß bzw. Erschütterung unempfindlicheren Positionierer zu schaffen.

Die der Erfindung zugrunde liegende Aufgabenstellung wird durch die Merkmale des Anspruchs 1 gelöst. Vorteilhafte Ausgestaltungen und Weiterbildungen der Erfindung sind in den Unteransprüchen angegeben.

Gemäß dem Anspruch 1 weist der erfindungsgemäße Positionierer eine erste Baueinheit und eine relativ zu der ersten Baueinheit verschiebliche zweite Baueinheit auf. Ferner weist der Positionierer einen zwischen der ersten und der zweiten Baueinheit wirkenden Slip-Stick-Antrieb zur Erzeugung einer Translationsbewegung zwischen den beiden Baueinheiten auf.

Mittels eines mit der ersten Baueinheit und dem Slip-Stick-Antrieb gekoppelten Festkörpergelenks ist die Translationsachse des Slip-Stick-Antriebs mechanisch gegen Drehung und/oder seitlichen Versatz gesichert.

Durch das erfindungsgemäße Festkörpergelenk wird also erreicht, dass Stöße und Erschütterungen, soweit sie eine Drehung und/oder einen seitlichen Versatz der Translationsachse bewirken würden, abgefangen werden. Dadurch wird insbesondere ein auf die Translationsachse einwirkender Aktuator als mechanisch schwächstes Glied des Slip-Stick-Antriebs gegen Beschädigung geschützt.

Nach der Erfindung handelt es sich bei dem Festkörpergelenk um ein flaches Festkörperband, welches sich senkrecht zu der Translationsachse des Slip-Stick-Antriebs erstreckt. Ein Festkörpergelenk in Form eines flachen Festkörperbandes ermöglicht sowohl einen Schutz gegen Drehung als auch einen Schutz gegen seitlichen Versatz der Translationsachse.

Nach einer vorteilhaften Ausgestaltung der Erfindung ist ein Aktuator des Slip-Stick-Antriebs fest mit dem Festkörpergelenk verbunden und das Festkörpergelenk steht fest mit der Translationsachse in Verbindung. In diesem Fall wird sowohl der Aktuator als auch die Translationsachse unmittelbar durch das Festkörpergelenk gesichert.

Vorteilhafterweise ist die Translationsachse ansonsten freitragend, d.h. lager- und befestigungsfrei gehalten. Dadurch werden die Betriebseigenschaften des Slip-Stick-Antriebs verbessert und sein Anwendungsgebiet erweitert, da sich herausgestellt hat, dass das Vorsehen einer minimalen Anzahl von Lager- und/oder Aufhängungspunkten typischerweise die Funktionsfähigkeit des Slip-Stick-Antriebs insbesondere auch unter Extrembedingungen (z.B. bei Anwendungen über einen großen Temperaturbereich) verbessert.

Bei einem weiteren Ausführungsbeispiel ist die Translationsachse des Slip-Stick-Antriebs an einem Aktuator des Slip-Stick-Antriebs und an dem Festkörpergelenk aufgehängt. Beispielsweise kann das eine Ende der Translationsachse fest mit dem Aktuator und das andere Ende der Translationsachse fest mit dem Festkörpergelenk verbunden sein. Auch in diesem Fall kann es günstig sein, wenn ansonsten keine weiteren Lager-oder Befestigungspunkte für die Translationsachse vorgesehen sind.

Eine weitere Ausgestaltung der Erfindung kennzeichnet sich dadurch, dass die Translationsachse des Slip-Stick-Antriebs an mindestens zwei Festkörpergelenken aufgehängt ist. In diesem Fall kann vorgesehen sein, dass der Aktuator des Slip-Stick-Antriebs fest mit dem einen Festkörpergelenk verbunden ist und dass das andere Festkörpergelenk fest mit der Translationsachse in Verbindung steht. Wiederum kann es aus den bereits erwähnten Gründen vorteilhaft sein, wenn die Translationsachse ansonsten (d.h. bis auf die genannten Befestigungspunkte) lager- und befestigungsfrei (d.h. freitragend) ist.

Eine besonders vorteilhafte Ausgestaltung der Erfindung kennzeichnet sich dadurch, dass der Slip-Stick-Antrieb einen als Piezoelement realisierten Aktuator aufweist. Piezoelemente sind insbesondere für Positionierer mit kleinen Schrittweiten (im Sub-Mikrometer-Bereich) der Translationsbewegung geeignet und profitieren in besonderem Maße von dem Schutz durch das oder die Festkörpergelenke, da sie bei einer Dreh- oder Scherkraftbeanspruchung leicht brechen können.

Eine bevorzugte Realisierung des erfindungsgemäßen Positionierers kennzeichnet sich dadurch, dass die erste Baueinheit in Form eines U-förmigen Gehäuses mit zwei Schenkeln und einem die Schenkel verbindenden Basisteil aufgebaut ist, wobei sich ein Festkörpergelenk oder mehrere Festkörpergelenke zwischen den Gehäuseschenkeln erstrecken. In diesem Fall kann der Aktuator des Slip-Stick-Antriebs zweckmäßigerweise an dem Basisteil des Gehäuses fixiert sein. Durch diese Realisierung eines erfindungsgemäßen Positionierers wird ein robuster und für praktische Anwendungen, insbesondere auch unter Extrembedingungen, geeigneter Aufbau des Positionierers geschaffen.

Die Erfindung wird nachfolgend anhand eines Ausführungsbeispiels unter Bezugnahme auf die Zeichnungen näher erläutert; in diesen zeigt:
- Fig. 1: perspektivische Ansichten der Bauteile eines erfindungsgemäßen Slip-Stick-Positionierers für Translationsbewegungen mit einem Festkörpergelenk;
- Fig. 2: eine schematische Teilschnittdarstellung von drei die Slip-Stick-Mechanik realisierenden Bauteilen des in Fig. 1 gezeigten Positionierers;
- Fig. 3: die in Fig. 2 dargestellten Bauteile in zusammengesetzter Anordnung;
- Fig. 4: eine perspektivische Ansicht des Gehäuses eines erfindungsgemäßen Slip-Stick-Positionierers mit zwei Festkörpergelenken;
- Fig. 5: das in Fig. 4 gezeigte Gehäuse in Draufsicht; und
- Fig. 6: einen erfindungsgemäßen Slip-Stick-Positionierer bestehend aus den in den Figuren 2 bis 5 gezeigten Teilen in Draufsicht.

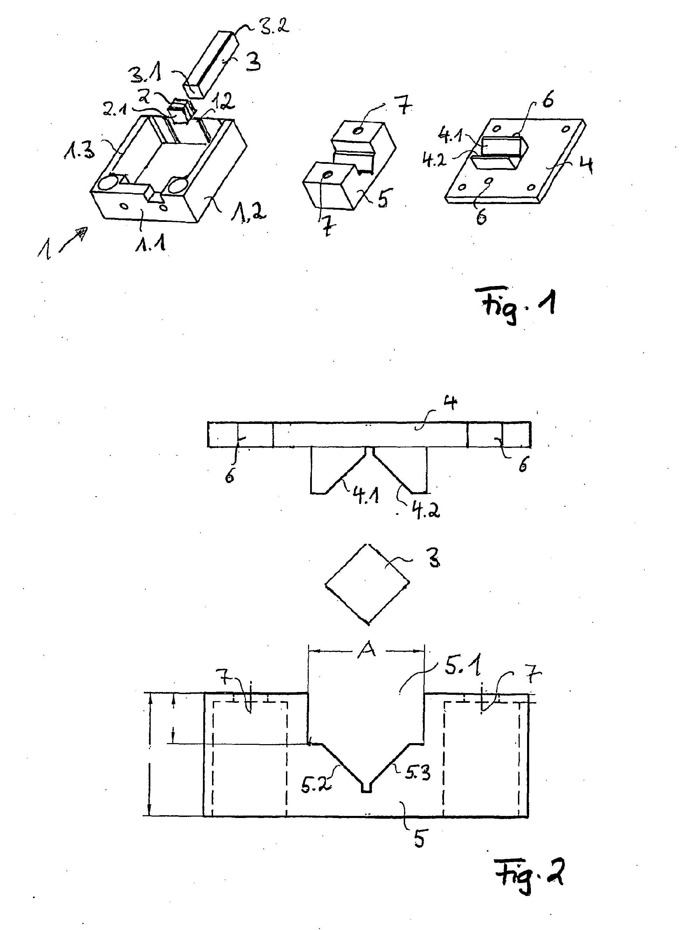

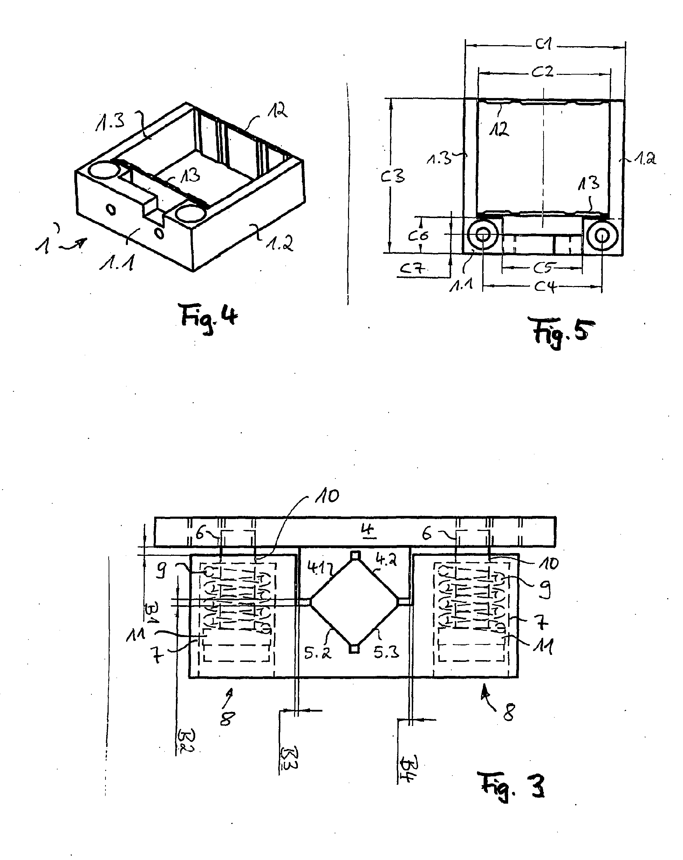

Der in Fig. 1 gezeigte Positionierer 1 weist ein U-förmiges Gehäuse 1, ein Piezoelement 2, eine Translationsachse 3, einen Träger 4 und ein in Art eines Schuhs ausgebildetes Träger-Gegenelement 5 auf. Das Gehäuse 1 ist aus einem Querprofil 1.1 und zwei senkrecht zu dem Querprofil 1.1 an dessen Enden angeordneten Schenkel 1.2, 1.3 aufgebaut. Zwischen den Enden der Schenkel 1.2, 1.3 erstreckt sich ein sogenanntes Festkörpergelenk 12, das später im Zusammenhang mit den Fig. 4 bis 6 näher erläutert wird. Im zusammengebauten Zustand (in Fig. 1 nicht dargestellt) erstreckt sich die Translationsachse 3 parallelmittig zwischen den beiden Schenkeln 1.2 und 1.3, wobei das querprofilseitige Ende 3.1 der Translationsachse 3 mit einer Endfläche des Piezoelements 2, z.B. durch Klebung, verbunden ist, während die gegenüberliegende Endfläche 2.1 des Piezoelements 2 ebenfalls, z.B. durch Klebung, mittig an der innenliegenden Fläche des Querprofils 1.1 angebracht ist. Die gegenüberliegende Endfläche 3.2 der Translationsachse 3 ist beispielsweise durch Klebung fest mit einer Kontaktfläche des Festkörpergelenks 12 verbunden.

Der Träger 4 weist an seiner Unterseite zwei Gleitvorsprünge mit Schrägflächenbereichen 4.1, 4.2 auf, die beispielsweise unter einem Winkel von 90° zueinander orientiert sind, siehe auch Fig. 2. Im Träger-Gegenelement 5 ist eine Gleitnut 5.1 vorgesehen, deren Querabmessung A im Wesentlichen der Querdimension der beiden Gleitvorsprünge entspricht und in deren Bodenbereich ebenfalls zwei unter 90° zueinander orientierte Schrägflächenbereiche 5.2, 5.3 vorhanden sind. Im zusammengebauten Zustand befindet sich die Translationsachse 3 zwischen dem Träger 4 und dem Träger-Gegenelement 5 und liegt mit ihren Umfangsflächen an den Schrägflächenbereichen 4.1, 4.2, 5.2, 5.3 an.

Wie in Fig. 3 ersichtlich, sind der Träger 4 und das Träger-Gegenelement 5 über einen Vorspannmechanismus miteinander gekoppelt. Der Vorspannmechanismus umfasst Schraubenfedern 9, die in Sackbohrungen 7 im Träger-Gegenelement 5 eingesetzt sind. An die Sackbohrungen 7 schließen sich bodenseitig Durchtrittsbohrungen 10 mit reduziertem Durchmesser an, welche im zusammengesetzten Zustand mit Gewindebohrungen 6 in dem Träger 4 ausgerichtet sind. Eine Schraube 11 stützt sich mit ihrem Schraubkopf an der Schraubenfeder 9 ab, durchsetzt die Schraubenfeder 9 und die Durchtrittsbohrung 10 und ist mit ihrem Gewindeende in die Gewindebohrung 6 eingeschraubt. Durch diesen Vorspannmechanismus kann erreicht werden, dass der Träger 4 und das Träger-Gegenelement 5 mit einer genau definierten Andruckkraft gegeneinander verspannt sind. Die Andruckkraft definiert die Stärke des reibschlüssigen Eingriffs, mit welchem die Schrägflächenbereiche 4.1, 4.2, 5.2, 5.3 an den Umfangsflächen der Translationsachse 3 angreifen. In Fig. 3 ist die Translationsachse 3 nicht dargestellt. Der Aufbau aus Translationsachse 3, Träger 4 und Träger-Gegenelement 5 realisiert die Slip-Stick-Mechanik.

Um eine definierte Andruckkraft des Trägers 4 und des Träger-Gegenelements 5 auf die Translationsachse 3 zu gewährleisten, muss sichergestellt sein, dass der Träger 4 und das Träger-Gegenelement 5 allein über die Schraubenfedern 7 kräftemäßig miteinander gekoppelt sind, d.h. keine Kraftnebenschlüsse zwischen diesen Teilen auftreten. Die in Fig. 3 eingezeichneten Spaltmaße zwischen dem Träger 4 und dem Träger-Gegenelement 5 können beispielsweise B1 = 0,5 mm, B2 = 0,4 mm, B3 = 0,2 mm und B4 = 0,2 mm sein.

Die Figuren 4 bis 6 zeigen einen erfindungsgemäßen Positionierer. Dieser unterscheidet sich von dem anhand der Figuren 1 bis 3 beschriebenen Positionierer allein dadurch, dass sein Gehäuse 1' mit einem weiteren Festkörpergelenk 13 versehen ist.

Die beiden Festkörpergelenke 12, 13 erstrecken sich zwischen den Schenkeln 1.2 und 1.3 des Gehäuses 1'. Das gesamte Gehäuse 1' einschließlich der Festkörpergelenke 12, 13 ist vorzugsweise, z.B. durch eine Fräsbearbeitung, aus einem Stück gefertigt, d.h. die Festkörpergelenke 12, 13 sind aus demselben Material (z.B. Titan) wie das Querprofil 1.1 und die Schenkel 1.2, 1.3. Die Festkörpergelenke 12, 13 sind in Form dünner Bänder realisiert und können querverlaufende Verdünnungsabschnitte 12.1 bzw. 13.1 aufweisen. Vorzugsweise werden die Übergangsbereiche zwischen den Schenkeln 1.2, 1.3 des Gehäuses 1' und den Festkörpergelenken 12, 13 durch derartige Verdünnungsabschnitte 12.1 bzw. 13.1 realisiert, und es wird vorzugsweise zwischen zwei Verdünnungsabschnitten 12.1, 13.1 ein ebener zentraler Kontaktflächenbereich 12.2, 13.2 definiert.

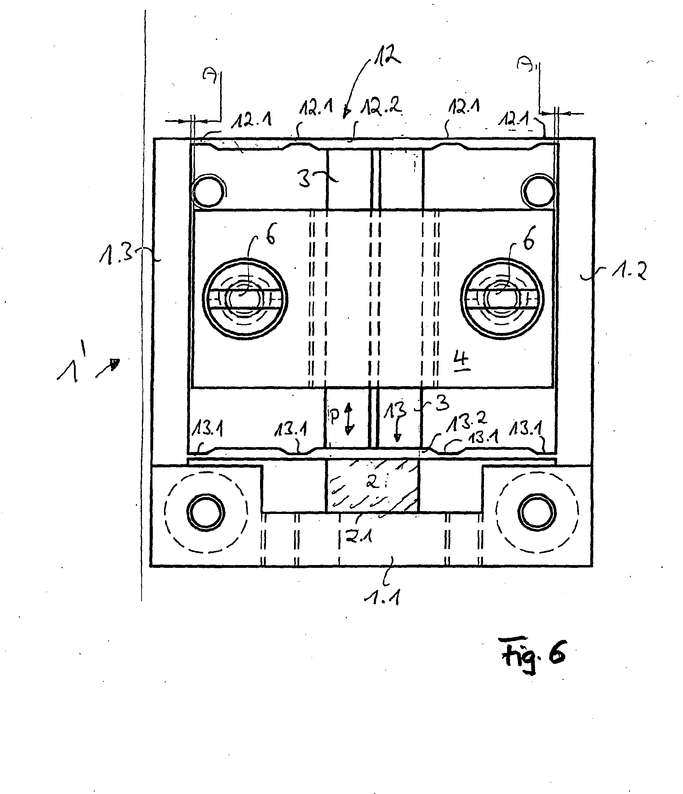

Wie in Fig. 6 erkennbar, befindet sich das Piezoelement 2 vorzugsweise zwischen dem Festkörpergelenk 13 und dem Querprofil 1.1 und ist mit seiner einen Endfläche 2.1, z.B. durch Verklebung, fest mit dem Querprofil 1.1 verbunden und mit seiner anderen Endfläche, z.B. ebenfalls durch Verklebung, fest mit der Rückseite der zentralen Zone 13.2 des inneren Festkörpergelenks 13 verbunden. Die Translationsachse 3 ist an ihrer einen Endfläche, z.B. durch Verklebung, fest mit dem inneren Festkörpergelenk 13 und an ihrer anderen Endfläche, z.B. durch Verklebung, fest mit der zentralen Zone 12.2 des randseitigen Festkörpergelenks 12 verbunden. Die gesamte Anordnung ist freitragend, d.h. die Festkörpergelenke 12, 13 bilden die einzigen Aufhängungspunkte für die aus der Translationsachse 3, dem Träger 4 und dem Träger-Gegenelement 5 bestehende Slip-Stick-Mechanik. Die Spalte D zur Vermeidung von Kraftnebenschlüssen können z.B. 0,2 mm betragen.

Die Umfangsform der Translationsachse 3 muss nicht quadratisch sein, sondern kann andere polygonale Gestaltungen oder Rundformen aufweisen. Es hat sich jedoch gezeigt, dass aufgrund ihrer hohen Oberflächengüte (Ebenheit) polygonale, insbesondere quadratische Umfangsformen wesentlich bessere Funktionseigenschaften aufweisen als Rundformen.

Die in den Figuren 4 bis 6 dargestellte Anordnung kann in vielfältiger Weise variiert werden. Bei einer ersten vereinfachten Bauweise entfällt das Festkörpergelenk 13. In diesem Fall, der exemplarisch bereits in Fig. 1 dargestellt ist, ist die Translationsachse 3 an ihrer einen Endfläche 3.1 fest mit dem Piezoelement 2 verbunden (z.B. verklebt) und an ihrer anderen Endfläche 3.2 fest an das Festkörpergelenk 12 ankontaktiert.

Es ist auch möglich, statt auf das Festkörpergelenk 13 auf das Festkörpergelenk 12 zu verzichten. In diesem Fall (zweite vereinfachte Bausweise) ist das Piezoelement 2 in der bereits beschriebenen Weise in den Zwischenraum zwischen dem Querprofil 1.1 und dem Festkörpergelenk 13 eingeklebt. Das Festkörpergelenk 13 trägt (z.B. ebenfalls über eine Verklebung) die Translationsachse 3 und damit die gesamte Slip-Stick-Mechanik 3, 4, 5.
Alle angesprochenen Varianten haben gemeinsam, dass bis auf die genannten Befestigungspunkte (Festkörpergelenke 12 und/oder 13 bzw. Piezoelement 2) keine weiteren Befestigungsoder Lagerpunkte für die Slip-Stick-Mechanik 3, 4, 5 vorgesehen sein können. Durch diese lager- und stützelementfreie Realisierung wird die Genauigkeit und Reproduzierbarkeit von Bewegungswegen des Positionierers insbesondere bei Anwendungen über einen breiten Temperaturbereich entscheidend verbessert.

Sämtlichen Ausführungsvarianten ist gemeinsam, dass sie das oder die Festkörpergelenke 12, 13 und das Piezoelement 2 vor mechanischen Beschädigungen (Bruch) schützen. Denn durch das Vorhandensein des Festkörpergelenks 13 wird erreicht, dass eine Drehbeaufschlagung oder eine Beaufschlagung der Translationsachse 3 mit einer seitlichen Kraft von dem Festkörpergeleck 13 abgefangen und damit nicht oder nur in abgeschwächter Form auf das Piezoelement 2 übertragen wird. Das Festkörpergelenk 12 sichert die Translationsachse 3 ebenfalls gegenüber seitlicher Auslenkung oder gegenüber Verdrehung, sodass selbst bei Nichtvorhandensein des Festkörpergelenks 13 bei Stoß oder Erschütterungen nur vergleichsweise geringere Dreh- oder Scherkräfte auf das Piezoelement 2 einwirken.

Die Funktionsweise des erfindungsgemäßen translatorischen Slip-Stick-Positionierers ist bekannt und wird im Folgenden nur kurz angesprochen. Typischerweise ist das Gehäuse 1, 1' ortsfest, während der Träger 4 über den Slip-Stick-Antrieb 2, 3, gegenüber dem Gehäuse 1, 1' in Längsrichtung der Translationsachse 3 (Pfeil P) verschiebbar ist. Durch Anlegen einer Sägezahn-Spannung mit flacher aufsteigender Flanke und steiler abfallender Flanke expandiert das Piezoelement 2 langsam und kontrahiert anschließend schnell. Infolgedessen wird die Translationsachse 3 langsam in Richtung ihres freien Endes verschoben und schnell in Richtung zum Querprofil 1.1 zurückgezogen. Da bei der langsamen Bewegung Haftreibung zwischen der Translationsachse 3 und den Schrägflächenbereichen 4.1, 4.2, 5.2, 5.3 auftritt, während bei der schnellen Bewegung aufgrund der Trägheit des Trägers 4 und des Träger-Gegenelements 5 Gleitreibung auftritt, bewirkt eine derartige elektrische Ansteuerung des Piezoelements 2 eine Bewegung des Trägers 4 mit Träger-Gegenelement 5 in Richtung von dem Querprofil 1.1 weg. Bei Verwendung einer inversen Sägezahn-Spannung (steile aufsteigende Flanke, langsam abfallende Flanke) erfolgt eine Bewegung des Trägers 4 mit Träger-Gegenelement 5 in Gegenrichtung. Die Schrittweite des Slip-Stick-Antriebs 2, 3, kann über die Höhe der angelegten Spannung gesteuert werden und z. B. zwischen 10 nm und 1 µm betragen.

Der Fig. 5 sind in beispielhafter Weise Dimensionsangaben eines erfindungsgemäßen Gehäuses 1' mit zwei Festkörpergelenken 12, 13 zu entnehmen. Das Gehäuse 1' kann beispielsweise quadratisch sein und die Außenmaße C1 = C3 = 24 mm aufweisen. Ferner kann C2 = 20 mm, C4 = 18 mm, C5 = 12 mm, C6 = 5, 6 mm und C7 = 3 mm gewählt sein. Eine typische maximale Auslenkung der Festkörpergelenke 12, 13 aufgrund der translatorischen Bewegung der Translationsachse 3 kann etwa im Bereich von 10 µm liegen und wird im Wesentlichen dadurch ermöglicht, dass die Dimension C2 um mehr als drei Größenordnungen größer als die erforderliche Translations-Auslenkung des Festkörpergelenks 12, 13 ist. Die (geringe) Durchbiegung der Festkörpergelenke 12, 13 in Art einer flexiblen Membran findet dabei hauptsächlich an den Verbindungsstellen 12.1, 13.1 statt.

## Patentansprüche

1. Positionierer mit
- einer ersten Baueinheit (1, 1') und einer relativ zu der ersten Baueinheit verschieblichen zweiten Baueinheit (4, 5) und
- einem zwischen der ersten und der zweiten Baueinheit wirkenden Slip-Stick-Antrieb (2, 3) zur Erzeugung einer Translationsbewegung zwischen den beiden Baueinheiten (1, 1'; 4, 5),
**gekennzeichnet durch**
- ein mit der ersten Baueinheit (1, 1') und dem Slip-Stick-Antrieb (2, 3) gekoppeltes Festkörpergelenk (12, 13), welches die Translationsachse (3) des Slip-Stick-Antriebs (2, 3) mechanisch gegen Drehung und/oder seitlichen Versatz sichert, wobei es sich bei dem Festkörpergelenk (12, 13) um ein flaches Festkörperband handelt, das sich senkrecht zu der Translationsachse (3) des Slip-Stick-Antriebs (2, 3) erstreckt.

2. Positionierer nach Anspruch 1,
**dadurch gekennzeichnet, dass** das flache Festkörperband Verdünnungsstellen (12.1, 13.1) aufweist.

3. Positionierer nach einem der vorhergehenden Ansprüche,
**dadurch gekennzeichnet, dass**
ein Aktuator (2) des Slip-Stick-Antriebs (2, 3) fest mit dem Festkörpergelenk (13) verbunden ist und dass das Festkörpergelenk (13) fest mit der Translationsachse (13) in Verbindung steht.

4. Positionierer nach Anspruch 3,
**dadurch gekennzeichnet, dass**
die an dem Festkörpergelenk (13) aufgehängte Translationsachse (3) ansonsten lager- und befestigungsfrei gehalten ist.

5. Positionierer nach einem der Ansprüche 1 oder 2,
**dadurch gekennzeichnet, dass**
die Translationsachse (3) des Slip-Stick-Antriebs (2, 3) an einem Aktuator (2) des Slip-Stick-Antriebs (2, 3) und an dem Festkörpergelenk (12) aufgehängt ist.

6. Positionierer nach Anspruch 5,
**dadurch gekennzeichnet, dass**
die an einem Aktuator (2) des Slip-Stick-Antriebs (2, 3) und an dem Festkörpergelenk (12) aufgehängte Translationsachse (3) ansonsten lager- und befestigungsfrei gehalten ist.

7. Positionierer nach einem der Ansprüche 1 bis 3,
**dadurch gekennzeichnet, dass**
die Translationsachse (3) des Slip-Stick-Antriebs (2, 3), an mindestens zwei Festkörpergelenken (12, 13) aufgehängt ist.

8. Positionierer nach Anspruch 7,
**dadurch gekennzeichnet, dass**
die an den mindestens zwei Festkörpergelenken (12, 13) aufgehängte Translationsachse (3) des Slip-Stick-Antriebs (2, 3) ansonsten lager- und befestigungsfrei gehalten ist.

9. Positionierer nach einem der vorhergehenden Ansprüche,
**dadurch gekennzeichnet, dass**
ein Aktuator (2) des Slip-Stick-Antriebs (2, 3) mit seiner einen Seite fest mit der ersten Baueinheit (1,1') und mit seiner anderen Seite entweder fest mit dem Festkörpergelenk (13) oder fest mit der Translationsachse (3) verbunden ist.

10. Positionierer nach einem der vorhergehenden Ansprüche,
**dadurch gekennzeichnet, dass**
der Slip-Stick-Antrieb (2, 3) einen als Piezoelement (2) realisierten Aktuator aufweist.

11. Positionierer nach einem der vorhergehenden Ansprüche,
**dadurch gekennzeichnet, dass**
die erste Baueinheit (1, 1') in Form eines U-förmigen Gehäuses mit zwei Schenkeln (1.2, 1.3) und einem die Schenkel (1.2, 1.3) verbindenden Basisteil (1.1) aufgebaut ist, wobei sich das Festkörpergelenk (12; 13) oder die mehreren Festkörpergelenke (12, 13) zwischen den Gehäuseschenkeln (1.2, 1.3) erstrecken.

12. Positionierer nach Anspruch 11,
**dadurch gekennzeichnet, dass**
der Aktuator (2) des Slip-Stick-Antriebs (2, 3) an dem Basisteil (1.1) des Gehäuses (1') fixiert ist.

## Claims

1. Positioning device having
- a first unit (1, 1') and a second unit (4, 5) displaceable relative to the first unit,
- a slip-stick drive (2, 3) acting between the first and the second unit for producing a translatory movement between the two units (1, 1'; 4, 5),
**characterized by**
- a solid-body joint (12, 13) which is coupled to the first unit (1, 1') and the slip-stick drive (2, 3) and which mechanically protects the translation shaft (3) of the slip-stick drive (2, 3) against rotation and/or lateral displacement, the solid-body joint (12, 13) being a flat solid-body strip which extends perpendicularly to the translation shaft (3) of the slip-stick drive (2, 3).

2. Positioning device according to Claim 1,
**characterized in that** the flat solid-body strip has thinned sections (12.1, 13.1).

3. Positioning device according to one of the preceding claims, **characterized in that** an actuator (2) of the slip-stick drive (2, 3) is firmly connected to the solid-body joint (13), and **in that** the solid-body joint (13) is firmly connected to the translation shaft (13).

4. Positioning device according to Claim 3,
**characterized in that** the translation shaft (3) attached to the solid-body joint (13) is otherwise held such as to be free of bearings and fastenings.

5. Positioning device according to one of Claims 1 and 2, **characterized in that** the translation shaft (3) of the slip-stick drive (2, 3) is attached to an actuator (2) of the slip-stick drive (2, 3) and to the solid-body joint (12).

6. Positioning device according to Claim 5,
**characterized in that** the translation shaft (3) attached to an actuator (2) of the slip-stick drive (2, 3) and to the solid-body joint (12) is otherwise held such as to be free of bearings and fastenings.

7. Positioning device according to one of Claims 1 to 3, **characterized in that** the translation shaft (3) of the slip-stick drive (2, 3) is attached to at least two solid-body joints (12, 13).

8. Positioning device according to Claim 7,
**characterized in that** the translation shaft (3), attached to the at least two solid-body joints (12, 13), of the slip-stick drive (2, 3) is otherwise held such as to be free of bearings and fastenings.

9. Positioning device according to one of the preceding claims, **characterized in that** an actuator (2) of the slip-stick drive (2, 3) is firmly connected with its one side to the first unit (1, 1') and is firmly connected with its other side either to the solid-body joint (13) or the translation shaft (3).

10. Positioning device according to one of the preceding claims, **characterized in that** the slip-stick drive (2, 3) has an actuator realized as a piezoelectric element (2).

11. Positioning device according to one of the preceding claims, **characterized in that** the first unit (1, 1') is constructed in the form of a U-shaped housing having two legs (1.2, 1.3) and a base part (1.1) connecting the legs (1.2, 1.3), the solid-body joint (12; 13) or the plurality of solid-body joints (12, 13) extending between the housing legs (1.2, 1.3).

12. Positioning device according to Claim 11,
**characterized in that** the actuator (2) of the slip-stick drive (2, 3) is fixed to the base part (1.1) of the housing (1').

## Revendications

1. Dispositif de positionnement, comprenant :
- une première unité structurelle (1, 1') et une seconde unité structurelle (4, 5) déplaçable par rapport à la première unité structurelle, et
- un entraînement à effet "slip-stick" (glisser-coller) (2, 3) agissant entre la première et la seconde unité structurelle pour engendrer un mouvement de translation entre les deux unités structurelles (1, 1' ; 4,5),
**caractérisé par**
- une articulation à corps solide (12, 13) accouplée avec la première unité structurelle (1, 1') et avec l'entraînement à effet "slip-stick" (2, 3), qui assure l'axe de translation (3) de l'entraînement à effet "slip-stick" (2, 3) mécaniquement à l'encontre d'une rotation et/ou d'un déport latéral, dans lequel l'articulation accord solide (12, 13) est une bande plane d'un corps solide, qui s'étend perpendiculairement à l'axe de translation (3) de l'entraînement à effet slip-stick (2, 3).

2. Dispositif de positionnement selon la revendication 1,
**caractérisé en ce que** la bande plane de corps solide présente des emplacements d'amincissement (12.1, 13.1).

3. Dispositif de positionnement selon l'une des revendications précédentes,
**caractérisé en ce qu'**un actionneur (2) de l'entraînement à effet slip-stick (2, 3) est relié à l'articulation à corps solide (13), et **en ce que** l'articulation à corps solide (13) est en liaison solidaire avec l'axe de translation (13).

4. Dispositif de positionnement selon la revendication 3,
**caractérisé en ce que** l'axe de translation (3) suspendu à l'articulation à corps solide (13) est maintenu par ailleurs exempt de palier et de fixation.

5. Dispositif de positionnement selon l'une des revendications 1 ou 2,
**caractérisé en ce que** l'axe de translation (3) de l'entraînement à effet slip-stick (2, 3) est suspendu à un actionneur (2) de l'entraînement à effet slip-stick (2, 3) et à l'articulation à corps solide (12).

6. Dispositif de positionnement selon la revendication 5,
**caractérisé en ce que** l'axe de translation (3) suspendu à un actionneur (2) de l'entraînement à effet slip-stick (2, 3) et à l'articulation à corps solide (12) est maintenu par ailleurs exempt de palier et de fixation.

7. Dispositif de positionnement selon l'une des revendications 1 à 3,
**caractérisé en ce que** l'axe de translation (3) de l'entraînement à effet slip-stick (2, 3) est suspendu à au moins deux articulations à corps solide (12, 13).

8. Dispositif de positionnement selon la revendication 7,
**caractérisé en ce que** l'axe de translation (3) de l'entraînement à effet slip-stick (2, 3), suspendu auxdites au moins deux articulations à corps solide (12, 13), est maintenu par ailleurs exempt de palier et de fixation.

9. Dispositif de positionnement selon l'une des revendications précédentes,
**caractérisé en ce qu'**un actionneur (2) de l'entraînement à effet slip-stick (2, 3) est relié par un côté fermement à la première unité structurelle (1, 1'), et par son autre côté soit fermement à l'articulation à corps solide (13) soit fermement à l'axe de translation (3).

10. Dispositif de positionnement selon l'une des revendications précédentes,
**caractérisé en ce que** l'entraînement à effet slip-stick (2, 3) comprend un actionneur réalisé sous forme d'élément piézo-électrique (2).

11. Dispositif de positionnement selon l'une des revendications précédentes,
**caractérisé en ce que** la première unité structurelle (1, 1') est réalisée sous la forme d'un boîtier en forme de U avec deux branches (1.2, 1.3), et une partie de base (1.1) qui relie les branches (1.2, 1.3), et dans lequel l'articulation à corps solide (12 ; 13) ou les plusieurs articulations à corps solide (12, 13) s'étend(ent) entre les branches (1.2, 1.3) du boîtier.

12. Dispositif de positionnement selon la revendication 11,
**caractérisé en ce que** l'actionneur (2) de l'entraînement à effet slip-stick (2, 3) est fixé sur la partie de base (1,1) du boîtier (1').
